# EUROPEAN PATENT SPECIFICATION

(11) **EP 0 547 576 B1**
(45) Date of publication and mention of the grant of the patent: **12.03.1997**
(21) Application number: 92121389.8
(22) Date of filing: 16.12.1992
(51) Int. Cl.: C03B 5/237, C03B 3/02, B01D 46/30

(54) **Process for melting silicate raw materials, in particular for the production of mineral wool, and apparatus for preheating the raw material mixture**
Verfahren zum Schmelzen von Silikatgemisch, insbesonderes zum Herstellen von Mineralwolle und Vorrichtung zum Vorwärmen des Rohmaterialgemisches
Procédé pour fondre des mélanges de silicates, en particulier pour la production de laine minérale et appareil pour préchauffer lesdits mélanges

(30) Priority: 17.12.1991 DE 4141625
(43) Date of publication of application: 23.06.1993
(73) Proprietor: Grünzweig + Hartmann AG, D-67059 Ludwigshafen (DE)
(72) Inventor: Fleckenstein, Hermann, W-6700 Ludwigshafen (DE); Ungerer, Heinz-Jürgen, W-6806 Viernheim (DE)
(74) Representative: KUHNEN, WACKER & PARTNER

(56) References cited:
- DE-A- 3 605 509

## Description

The invention relates to a process for melting silicate raw materials, in particular for the production of mineral wool, preferably rock wool from basalt, in accordance with the preamble of claim 1, and also to an apparatus for preheating the raw material mixture in accordance with the preamble of claim 6 for performing the process.

In melting silicate raw materials, particularly granular basalt, but also compacted pellets or pieces of silicate-containing material, the melting tank is supplied with large quantities of air for the combustion of fossil fuel, such as oil, so that the fuel burns in a large flame on the surface of the molten bath and produces a corresponding quantity of hot exhaust gas. In the space above the bath surface, the exhaust gas flow from the melt entrains impurities such as, in particular, fluorine, chlorine and sulphur dioxide. These impurities pollute the environment and must therefore be filtered out prior to exhaust of the tank gases into the atmosphere. In particular fluorine is contained in a certain proportion in the molten bath, mainly as a flux, and it must be ensured that fluorine escaping from the melt is returned to the melt in order to maintain the fluorine content therein acting as a flux.

In a process disclosed in published German patent application DE-A-3 605 509 in accordance with the preamble of claim 1, the tank exhaust gases leaving the raw material preheater are fed to a cleaning apparatus for removal of dust-like and/or gaseous constituents such as inorganic fluorides. Downstream of the cleaning apparatus, the tank exhaust gases pass into a regenerator and from there into a discharge stack where, possibly, a further, final cleaning operation or filtering operation may be performed on the tank exhaust gases.

Although a smaller or larger part - depending on the process design applied in the case in question - of the impurities entrained by the tank exhaust gas, particularly dust and aggressive media such as fluorine, chlorine and similar, is separated by deposition of the raw material particles and thus recycled to the molten bath during the heat exchange effected in direct contact with the raw material mixture, the tank exhaust gas which has been subjected to heat exchange with the raw material mixture still contains aggressive media, particularly gaseous ones, in appreciable quantities. In order to facilitate an appreciable temperature drop during the initial heating of the combustion air and in order to avoid acid condensation which occurs when the combustion gases enter the stack at a temperature below 150°C, which is below the dew point, provisions are made for further cleaning the tank exhaust gases, and in particular for removing acidic, gaseous, aggressive media. Aside from reducing the burden on a downstream filter or on the environment, such a cleaning operation performed on the tank exhaust gases prior to preheating the combustion air has the effect of maximising utilisation of the heat contained by the tank exhaust gases during the preheating process, as the outlet temperature from the preheating apparatus into the stack can be further reduced owing to removal of acid-forming impurities. In the known process, not only the impurities separated in the raw material mixture but also the impurities separated in the course of the further cleaning process, such as in particular important additives removed from the melt, for example fluorine, are recycled back to the melt.

The cleaning apparatus downstream of the raw material preheater, as seen in the direction of tank exhaust gas flow, therefore serves, in the case of the known process, both to remove the gaseous, aggressive media contained in the tank exhaust gases, in order to facilitate a further temperature reduction in the subsequent heat exchanger for preheating the combustion air, and to recycle the impurities entrained in the tank exhaust gases back to the melt, such as in particular additives which had been removed from the melt.

The cleaning apparatus described, for example, in DE-A-3 605 509 is arranged separately and downstream of the raw material preheater. In order to recover the impurities from the tank exhaust gases and recycle necessary constituents back to the melt, the cleaning apparatus is equipped with a system for collecting and returning the impurities. This cleaning apparatus has proven thoroughly successful. Its location downstream of the raw material preheater and the resultant relatively low temperature level, however, are disadvantageous.

It is therefore the objective of the present invention to create a process of the species indicated in the preamble of claim 1 and an apparatus of the species indicated in the preamble of claim 6, whereby an effective reduction in the emission values for dust, fluorides and chlorides in the tank exhaust gases and recycling of the additives back to the melt are achieved with as little additional outlay as possible.

This object is achieved by means of the characterising features of claims 1 and 6.

As the stages of: preheating the raw material mixture, cleaning the tank exhaust gases, and recycling the impurities back to the melt are performed simultaneously, in one integrated procedural step and by the same apparatus, the ensuing process design exhibits discernible advantages in terms of the simplicity of the equipment required.

Further, the cleaning of the tank exhaust gas which is in direct contact with the supplied raw material mixture is performed with a suitable sorbent added to the raw material mixture.

As the tank exhaust gases leaving the raw material preheater are essentially freed of impurities and now only contain small quantities of fine dust which can easily be filtered out with a dry filter or electrostatic precipitator particularly suited for fine dust, the final product of the process route is a virtually dust-free exhaust gas which satisfies the requirements of technical clean air legislation and can therefore be discharged into the atmosphere without any further measures. A further advantage is that the heat exchanger located downstream of the raw material preheater in the direction of the tank exhaust gas flow is not encumbered with impurities.

As claimed in claim 2, the sorbent preferably exhibits a mixture of a powdered absorbent, in particular lime and/or soda, and a liquid, preferably lime milk and/or lime-soda milk. Through the addition of lime milk and/or lime-soda milk, a better surface covering is achieved on the raw material mixture, and thus a better degree of absorption efficiency. Herein, the milk is simply sprayed onto the raw material mixture introduced into the raw material preheater by means of an atomising nozzle. Moreover, as claimed in claim 3, the powdered absorbents are in each case supplied to the raw material mixture by a proportional feed process. The concentration of the sorbent for cleaning the tank exhaust gases of fluorine and/or chlorine is, in this connection, selected as claimed in claim 4, such that the provisions of technical clean air legislation are fulfilled.

It was found that the sorbents added to the raw material mixture for cleaning the tank exhaust gases essentially have no deleterious effects on the properties of the melt, so that they can be fed into the melting tank without reservation, as claimed in claim 5, together with the raw material mixture.

As claimed in claim 6, all that is required aside from the raw material preheater for performing the process according to the invention, is a storage silo for sorbent and a metering device for proportional feed of the sorbent from the storage silo into the raw material preheater. Where a liquid is employed for mixing the sorbent, a liquid container and an atomising element for proportional spraying of the liquid from the liquid container into the raw material preheater are provided, as claimed in claim 7.

In order to clean the tank exhaust gases leaving the raw material preheater of any fine dust contained therein, a special filter may be provided for this purpose as claimed in claim 8, said filter exhibiting a correspondingly good level of separating efficiency and being located downstream of the raw material preheater.

Further details, features and advantages of the invention are revealed in the following description of an embodiment by reference to the drawing in which
- Fig. 1: is a schematic representation of the process design according to the invention;
- Fig. 2: likewise is a schematically simplified representation of the raw material preheater with the storage containers for powdered sorbent and liquid additives.

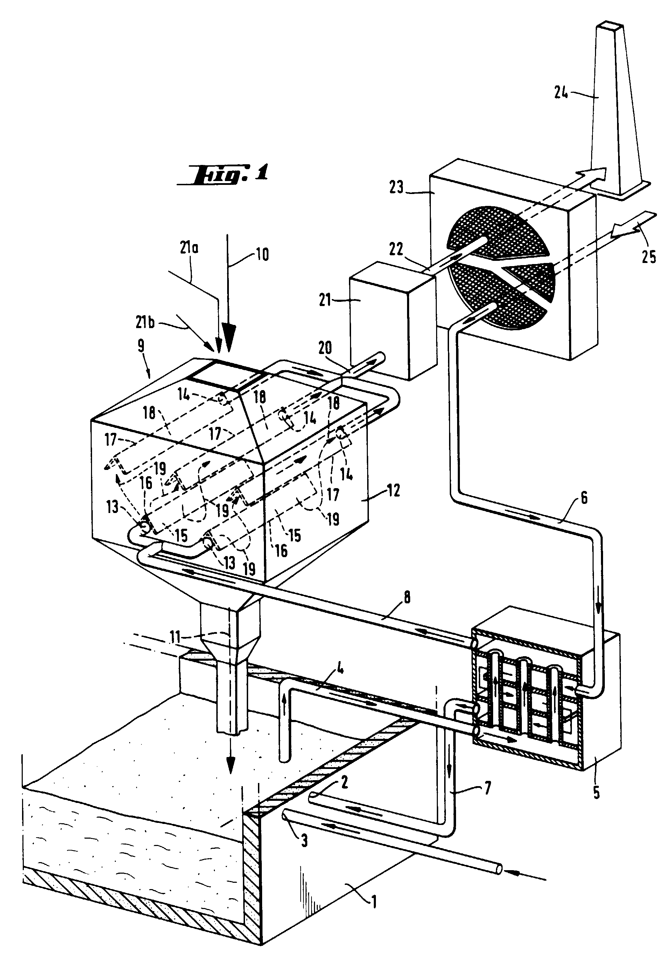

In Fig. 1, a conventional melting tank as employed for the melting of silicate raw materials, for example for the production of mineral wool, is designated by 1. In order to supply the heat energy for the melting process, combustion air is introduced into the chamber above the melt at 2, and a fossil fuel such as gas or oil is introduced into the same chamber at 3, said combustion air and fossil fuel then forming an elongated flame on top of the bath surface. The tank exhaust gases produced as a result are removed from the melting tank 1 via a schematically indicated duct 4, and fed into a heat exchanger 5, which in this embodiment has the form of a counter-current recuperator, to which combustion air as the medium to be preheated by absorption of heat from the tank exhaust gases is supplied via a conduit 6. The combustion air passes from the heat exchanger 5 via a conduit 7 to the melting tank 1, while the tank exhaust gases pass from the heat exchanger 5 via a conduit 8 to a raw material preheater 9. The raw material preheater 9 is charged with a raw material mixture at ambient temperature in the direction indicated by arrow 10, and in turn discharges the raw material mixture which has been preheated by the tank exhaust gases into the melting tank 1 as indicated by arrow 11.

The raw material preheater 9 comprises a receiving container 12 which receives the raw material mixture and which is provided on one side with inlet openings 13 and on the opposite side with outlet openings 14 for the tank exhaust gases. The inlet openings 13 lead into inlet flow passages 15 for the tank exhaust gases. Said inlet flow passages 15 are confined at their top by a sheet metal roof 16 having the configuration of an inverted V, and at the bottom by a raw material mixture at the natural angle of repose. At that end which is opposite to the inlet openings 13, the inlet flow passages 15 are closed by the adjacent side wall of the receiving container 12.

Roofs 17 having the configuration of an inverted V are disposed above the inlet flow passages 15 and are staggered from them. Said roofs 17 define respective outlet flow passages 18, which are closed at one end by the wall of the receiving container 12 featuring the inlet openings 13, and the other ends of which are constituted by the outlet openings 14. In this arrangement, tank exhaust gases flow from the conduit 8 through the inlet openings 13 into the inlet flow passages 15 and past the side edges of the latter to enter the raw material mixture, then flow through said mixture as indicated by the arrows 19, whereupon they are collected in the upper outlet flow passages 18 and leave the receiving container 12 of the cleaning apparatus 9 through the outlet openings 14 to enter a conduit 20.

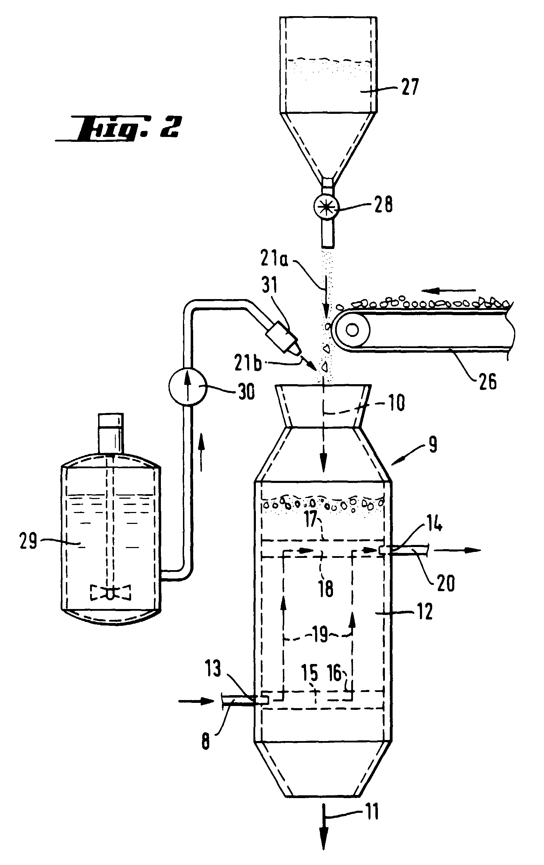

According to the invention, sorbents for cleaning the tank exhaust gases are introduced into the raw material preheater 9 in the manner indicated by arrow 21a and at the same time as the raw material mixture. The representation of the system for infeeding the sorbent into the raw material preheater 9 shown in Fig. 1 is no more than diagrammatic in nature; for a more precise explanation, reference is hereby made to the description further below relating to Fig. 2.

The tank exhaust gases leaving the raw material preheater are essentially freed of impurities and, at this stage, contain only small quantities of fine dust. This fine dust can now be filtered out by a downstream dry filter or electrostatic precipitator 21, into which the tank exhaust gases are fed via conduit 20. The tank exhaust gases pass from the fine dust filter 21 into a regenerator which, in the present embodiment, takes the form of a rotary heat exchanger 23, and flow into a discharge stack 24 where they are discharged into the atmosphere. The heat exchanger 23 serves to heat ambient air drawn in as indicated by arrow 25 which is subsequently supplied to heat exchanger 5 via conduit 6.

In the heat exchanger 5, the temperature of the ambient air is raised from ambient temperature, i.e. approx. 20 - 30°C, to around 900°C, with the resulting heat loss causing the temperature of the tank exhaust gases, which have a temperature of approx. 1400°C in the exhaust gas duct 4, to drop to around 530°C. As a result, the raw material mixture in the raw material preheater 9 is only preheated to approx. 450°C. Depending on the ambient temperature, the resulting temperature of the heated combustion air in conduit 6 lies between approx. 130°C and 180°C. This initially heated combustion air is further heated in heat exchanger 5, in a process of heat exchange with the 1400°C hot exhaust gases, to a higher temperature of approx. 950°C, resulting in a temperature drop in the tank exhaust gases in the conduit 8 to approx. 600 - 650°C. Preheating of the raw material mixture in the raw material preheater 9 is performed to a temperature of 520 - 580°C, with the temperature of the tank exhaust gases in conduit 8 being selected such that the application temperature of the raw material preheater 9 is not quite exceeded even on hot days. Under normal conditions, this corresponds to a temperature of approx. 650°C of the tank exhaust gases in the conduit 8. In steady-state operations, the temperature of the tank exhaust gases in conduits 20 and 22 is essentially the same at 300 - 350°C, such that the tank exhaust gases are available at this temperature for initially heating the combustion air in heat exchanger 23, whereby they are cooled down to 150 - 200°C.

The tank exhaust gases present in conduit 8 are substantially contaminated by dust and aggressive gaseous constituents, particularly fluorine, and have to be cleaned prior to their discharge into the ambient air. In addition, the impurities in the tank exhaust gases should be recovered as necessary constituents of the molten bath. According to the invention, therefore, the raw material preheater 9 simultaneously performs the functions of a cleaning apparatus and of a recovery facility.

In the schematic representation shown in Fig. 2, further details of the embodiment according to the invention are illustrated in this connection.

Immediately apparent are the schematically represented raw material preheater 9 with the receiving container 12, the inlet openings 13, shown only in diagrammatic form, for the incoming tank exhaust gases (raw gas), and the outlet openings 14 for the cleaned tank exhaust gases (clean gas). Raw material, in particular raw basalt, is fed into the raw material preheater 9 via a conveyor 26 in the direction of arrow 10 , and then, following preheating, into the melting tank in the direction of arrow 11. In Fig. 2, there is a storage silo 27 for powdered sorbent above the raw material preheater 9, from which the powder is sprinkled together with the raw basalt into the raw material preheater 9 in the direction of arrow 21a by means of a proportional feed device, for example a star-wheel feeder 28. Optionally, a liquid tank 29 may be provided from which lime milk and/or lime-soda milk is delivered by a pump 30 to an atomising element, for example an atomising nozzle 31, which then sprays the liquid in the direction of arrow 21b onto the raw basalt as it trickles into the raw material preheater 9. All the adsorbents introduced into the raw material preheater 9, i.e. both the powdered sorbent and the lime milk, are discharged into the melting tank together with the raw material in accordance with arrow 11, so that, in particular, the fluorine leaving the melt is automatically cycled back into the melt in order to maintain the fluorine content thereof.

As is immediately apparent from Fig. 2, the three process steps: preheating the raw material mixture, cleaning the tank exhaust gases, and recycling the impurities back into the melt; are performed simultaneously as one integrated process step and by the same apparatus, namely the raw material preheater 9. Owing to the large exchange area available, direct application of the sorbent onto the raw material mixture results in effective cleaning of the tank exhaust gases, which are in direct contact with the infed raw material mixture. The raw material preheater 9 simultaneously performs the functions of a preheater and of a reactor for separating out chlorides and fluorides.

The sorbent, lime and soda, may be introduced in various chemical forms and compositions with the raw basalt into the raw material preheater 9. Examples include:
Calcium hydroxide, suspension in water (approx. 1 to 7 g/m³ (STP), preferably 2.5 to 5 g/m³ (STP))
Calcium hydroxide, powdered (approx. 2.5 g/m³ (STP))
Sodium carbonate, powdered (approx. 4 g/m³ (STP))
Calcium hydroxide + sodium carbonate, powdered (approx. 2.5 to 3 g/m³ (STP) each)
Calcium hydroxide + sodium carbonate, suspension in water (approx. 3 to 4.5 g/m³ (STP) each)

The numerical values indicated above constitute approximate guide values which may vary depending on the emitted quantities of pollutants; measurements revealed that even at the outlet of the raw material preheater 9 the toxic concentrations with respect to fluorides and chlorides could be reduced to a point where they comply with the requirements of technical clean air legislation. A mixture of the sorbents lime and soda proved very promising. It should moreover be pointed out that sodium carbonate (Na₂CO₃) also reacts with nitrogen oxides so that, in addition, a reduction in the NOₓ concentration can be expected.

The dust which is entrained with the flow from the raw material preheater 9 contains large quantities of lime and soda, so that further fluorides and chlorides are absorbed in the conduit 20 between the raw material preheater 9 and the dust filter.

## Claims

1. A process for melting silicate raw materials, in particular for the production of mineral wool, preferably rock wool of basalt, in which:
- the melting heat is generated by combustion of fossil fuels and supplied to a melting tank (1),
- initially the combustion air and subsequently, in direct contact, the infed raw material mixture is preheated by means of the tank exhaust gases,
- the tank exhaust gases are cleaned in particular of dust and/or aggressive media such as fluorine, chlorine or similar,
- separated impurities are recycled back to the molten bath,
characterised in that
preheating the raw material mixture, cleaning the tank exhaust gases and recycling the impurities back into the molten bath are performed simultaneously as an integrated process step and by means of the same apparatus,
wherein cleaning the tank exhaust gas, which is in direct contact with the infed raw material mixture, is performed by adding a sorbent to the raw material mixture immediately before it is introduced into a raw material preheater.

2. A process as claimed in claim 1, wherein the sorbent features a powdered absorbent, in particular lime and/or soda, and a liquid, preferably lime milk and/or lime-soda milk.

3. A process as claimed in claim 2, wherein the powdered absorbent is separately and proportionally fed into the raw material mixture for cleaning the tank exhaust gases.

4. A process as claimed in one of the preceding claims, wherein cleaning the tank exhaust gases of fluorine and/or chlorine is performed with a sorbent of such concentration as necessary to meet the requirements of technical clean air legislation.

5. A process as claimed in one of the preceding claims, wherein the sorbents added to clean the tank exhaust gases are fed into the melting tank together with the raw material mixture.

6. An apparatus for preheating the raw material mixture for performing the process as claimed in at least one of claims 1 to 5, with a receiving container (12) for the raw material mixture
- in which the raw material mixture may be transported downward past baffle elements through the effect of gravity,
- having at least one lateral lower inlet opening (13) and at least one upper outlet opening (14) for the tank exhaust gases, said inlet opening (13) joining into a horizontal inlet flow passage (15) which is located in the raw material and closed at the opposite end, and which is defined at its top by a convex roof (16) having, for example, the form of an inverted V, and which is defined at the bottom by the raw material mixture at a natural angle of repose,
- and in which inlet openings (13) and outlet openings (14) of distributed arrangement are provided, with each outlet opening (14) being assigned an outlet flow passage (18) corresponding to the inlet flow passages (15),
characterised in that
a sorbent storage silo (27) is provided, together with a proportional feed device (28) for metering out sorbent from the storage silo (27) into the receiving container (12).

7. An apparatus as claimed in claim 6, wherein a liquid container (29) is provided together with an atomising element (31) for proportional spraying of liquid from the liquid container (29) into the receiving container (12).

8. An apparatus as claimed in one of the preceding claims, wherein a filter (21) is provided, the inlet of which is connected to the upper outlet opening (14) of the receiving container (12) for cleaning the tank exhaust gases.

## Patentansprüche

1. Verfahren zum Erschmelzen von silikatischen Rohstoffen, insbesondere zur Herstellung von Mineralwolle, vorzugsweise Steinwolle aus Basalt, bei dem gilt:
- die Schmelzwärme wird durch Verbrennung fossiler Brennstoffe einer Schmelzwanne (1) zugeführt,
- mittels der Wannenabgase werden zunächst die Verbrennungsluft sowie anschließend im Direktkontakt das zugeführte Rohstoffgemenge vorgewärmt,
- die Wannenabgase werden insbesondere von Staub und/oder aggressiven Medien wie Fluor, Chlor oder dergleichen gereinigt,
- abgeschiedene Verunreinigungen werden der Schmelze wieder zugeführt,
dadurch gekennzeichnet, daß
das Vorwärmen des Rohstoffgemenges, das Reinigen der Wannenabgase und das Wiederzuführen der Verunreinigungen in die Schmelze gleichzeitig als ein integrierter Prozeßschritt und mittels derselben Vorrichtung durchgeführt werden,
wobei die Reinigung des im Direktkontakt mit dem zugeführten Rohstoffgemenge befindlichen Wannenabgases durch Zugabe eines Sorptionsmittels auf das Rohstoffgemenge durchgeführt wird, unmittelbar bevor es in einen Rohstoffvorwärmer zugeführt wird.

2. Verfahren nach Anspruch 1, dadurch gekennzeichnet, daß das Sorptionsmittel ein pulvriges Absorptionsmittel, insbesondere Kalk und/oder Soda, und eine Flüssigkeit, vorzugsweise Kalkmilch und/oder Kalk/Soda-Milch aufweist.

3. Verfahren nach Anspruch 2, dadurch gekennzeichnet, daß die pulvrigen Absorptionsmittel getrennt und in jeweils dosierter Weise zur Reinigung der Wannenabgase dem Rohstoffgemenge zugeführt werden.

4. Verfahren nach einem der vorhergehenden Ansprüche, dadurch gekennzeichnet, daß die Reinigung der Wannenabgase von Fluor und/oder Chlor mit Sorptionsmitteln derartiger Konzentration durchgeführt wird, daß die Vorgaben der Technischen Anleitung Luft erfüllt werden.

5. Verfahren nach einem der vorhergehenden Ansprüche, dadurch gekennzeichnet, daß die zur Reinigung der Wannenabgase zugegebenen Sorptionsmittel zusammen mit dem Rohstoffgemenge der Schmelzwanne zugeführt werden.

6. Vorrichtung zur Vorwärmung des Rohstoffgemenges zur Durchführung des Verfahrens nach wenigstens einem der Ansprüche 1 bis 5, mit einem Vorlagebehälter (12) für das Rohstoffgemenge,
- in dem das Rohstoffgemenge durch Schwerkrafteinwirkung an Schikanen vorbei nach unten förderbar ist,
- mit wenigstens einer seitlichen unteren Eintritts(13) und wenigstens einer oberen Austrittsöffnung (14) für die Wannenabgase, wobei die Eintrittsöffnung (13) in einen horizontalen, am gegenüberliegenden Ende geschlossenen Eintrittsströmungskanal (15) im Rohstoffgemenge mündet, der an seiner Oberseite durch ein konvexes, beispielsweise umgekehrt V-förmiges Dach (16), und an seiner Unterseite durch im natürlichen Böschungswinkel liegendes Rohstoffgemenge begrenzt ist,
- und wobei verteilt angeordnete Eintritts- (13) und Austrittsöffnungen (14) vorgesehen sind, und jeder Austrittsöffnung (14) ein den Eintritts-Strömungskanälen (15) entsprechender Austritts-Strömungskanal (18) zugeordnet ist,
dadurch gekennzeichnet, daß
ein Vorratssilo (27) für Sorptionsmittel vorgesehen ist, sowie eine Dosiervorrichtung (28) zur dosierten Abgabe von Sorptionsmittel aus dem Vorratssilo (27) in den vorlagebehälter (12).

7. Vorrichtung nach Anspruch 6, gekennzeichnet durch einen Flüssigkeitsbehälter (29), sowie durch ein Zerstäuberorgan (31) zum dosierten Aufsprühen von Flüssigkeit aus dem Flüssigkeitsbehälter (29) in den Vorlagebehälter (12).

8. Vorrichtung nach einem der vorhergehenden Ansprüche, gekennzeichnet durch ein eingangsseitig an die obere Austrittsöffnung (14) des Vorlagebehälters (12) angeschlossenes Filter (21) zur Reinigung der Wannenabgase von Feinstaub.

## Revendications

1. Procédé de fusion de matériaux siliceux, en particulier pour la production de laine minérale, de préférence de laine de roche de basalte, dans lequel :
- la chaleur de fusion est engendrée par combustion de combustibles fossiles et fournie à un réservoir de fusion (1),
- dans un premier temps l'air de combustion puis, par contact direct, le mélange constituant le matériau introduit, est préchauffé au moyen des gaz d'échappement du réservoir,
- les gaz d'échappement du réservoir sont lavés en particulier de la poussière et/ou des milieux agressifs tels que fluor, chlore ou similaires,
- les impuretés séparées sont recyclées dans le bain fondu,
caractérisé **en ce que** le préchauffage du mélange constituant le matériau, le lavage des gaz d'échappement du réservoir et le recyclage des impuretés dans le bain fondu sont effectués simultanément en une étape de procédé intégrée et au moyen du même appareil, le lavage du gaz d'échappement du réservoir, qui est en contact direct avec le mélange constituant le matériau introduit, étant effectué par addition d'un agent de sorption au mélange constituant le matériau, immédiatement avant qu'il soit introduit dans un préchauffeur de matériau.

2. Procédé selon la revendication 1, dans lequel l'agent de sorption est un agent d'absorption en poudre, en particulier de la chaux et/ou de la soude, et un liquide, de préférence du lait de chaux et/ou du lait sodo-calcique.

3. Procédé selon la revendication 2, dans lequel l'agent d'absorption en poudre est alimenté séparément et proportionnellement dans le mélange constituant le matériau, pour laver les gaz d'échappement du réservoir.

4. Procédé selon l'une quelconque des revendications précédentes, dans lequel le lavage des gaz d'échappement du réservoir du fluor et/ou du chlore est effectué avec un agent de sorption en une concentration telle que les prescriptions de la législation en matière de propreté des gaz de rejet industriel soient satisfaites.

5. Procédé selon l'une quelconque des revendications précédentes, dans lequel les agents de sorption ajoutés pour laver les gaz d'échappement du réservoir sont alimentés dans le réservoir de fusion en même temps que le mélange constituant le matériau.

6. Appareil pour préchauffer le mélange constituant le matériau et accomplir le procédé revendiqué dans l'une quelconque des revendications 1 à 5, avec un conteneur de réception (12) pour le mélange constituant le matériau
- dans lequel le mélange constituant le matériau peut être transporté vers le bas à travers des éléments en chicane par effet de gravité,
- ayant au moins une ouverture d'entrée inférieure latérale (13) et au moins une ouverture de sortie supérieure (14) pour les gaz d'échappement du réservoir, ladite ouverture d'entrée (13) communiquant avec un passage horizontal d'entrée du fluide (15) qui est situé dans le matériau et fermé à l'extrémité opposée, et qui est défini à son sommet par un toit convexe (16) ayant par exemple la forme d'un V inversé, et qui est défini à sa base par le mélange constituant le matériau à un angle de talus naturel,
- et dans lequel des ouvertures d'entrée (13) et des ouvertures de sortie (14) disposées en alternance sont prévues, chaque ouverture de sortie (14) correspondant à un passage de sortie de fluide (18) correspondant aux passages d'entrée de fluide (15),
caractérisé **en ce qu'un** silo de stockage d'agent de sorption (27) est prévu, ainsi qu'un dispositif d'alimentation proportionnelle (28) pour doser l'agent de sorption du silo de stockage (27) alimenté dans le conteneur de réception (12).

7. Appareil selon la revendication 6, dans lequel un conteneur de liquide (29) est prévu avec un élément d'atomisation (31) pour une pulvérisation proportionnelle de liquide à partir du conteneur de liquide (29) dans le conteneur de réception (12).

8. Appareil selon l'une quelconque des revendications précédentes, dans lequel un filtre (21) est prévu, dont l'entrée est reliée à l'ouverture de sortie supérieure (14) du conteneur de réception (12) pour laver les gaz d'échappement du réservoir.
